# EUROPEAN PATENT SPECIFICATION

(11) **EP 1 789 351 B1**
(45) Date of publication and mention of the grant of the patent: **12.11.2008**
(21) Application number: 04787598.4
(22) Date of filing: 17.09.2004
(51) Int. Cl.: B65G 47/84

(54) **APPARATUS FOR FEEDING POUCHES AND THEIR RESPECTIVE SPOUTS TO A ROTARY MACHINE FOR THE PROCESSING OF THE SAME AND RELATIVE METHOD**
VORRICHTUNG ZUM ZUFÜHREN VON BEUTELN UND IHRE JEWEILIGEN TÜLLEN ZU EINER DREHMASCHINE FÜR DEREN VERARBEITUNG UND ENTSPRECHENDES VERFAHREN
APPAREIL SERVANT A ALIMENTER UNE MACHINE ROTATIVE EN POCHES ET EN BECS VERSEURS CORRESPONDANTS EN VUE DE LEUR TRAITEMENT ET PROCEDE CORRESPONDANT

(43) Date of publication of application: 30.05.2007
(73) Proprietor: INDAG Gesellschaft für Industriebedarf mbH & Co. Betriebs KG, 69214 Eppelheim (DE)
(72) Inventor: FURLOTTI, Filippo, 43100 Parma (IT)
(74) Representative: Grünecker, Kinkeldey, Stockmair & Schwanhäusser Anwaltssozietät
(86) International application number: PCT/IT2004/000506
(87) International publication number: WO 2006/030464

(56) References cited:
- EP-A- 1 167 011
- EP-A- 1 291 162
- US-A- 4 643 633
- US-B1- 6 244 307

## Description

### TECHNICAL FIELD AND BACKGROUND ART.

The present invention relates to an apparatus for feeding pouches and their respective spouts to a rotary machine for the processing of the same and relative feeding method.

As is well known, drinks, and in particular fruit juices and sports drinks, are increasingly more frequently sold and preserved in flexible containers commonly known as "pouches".

Generally, these flexible containers comprise a pouch, normally made of polyethylene (PE) and have a spout, to enable the product contained inside the container to be poured out.

Pouring of the product is particularly facilitated by the possibility to exert pressure on the beverage by squeezing the pouch.

The flexible containers, or pouches, are made from a pair of polyethylene sheets the edges of which are welded together leaving an opening.

Into this opening a portion of the spout is inserted and secured by means of welding. In particular, this welding concerns the edges of the opening and is performed by applying heat to partially melt said edges so that they adhere to the portion of the spout inserted in the pouch.

Generally, the spout is inserted inside the opening before the container is filled.

It is well known that systems already exist for the processing of pouches comprising rotary machines with starwheels for picking up and transferring the pouches, that work together with one or more starwheels for filling and sealing the pouches.

An important feature of systems with rotary machines is that they can operate in continuous mode and thus guarantee high productivity.

To take full advantage of this feature, it is essential that a continuous flow of pouches be fed to the processing starwheel.

In particular, since the pouches are assembled directly on the welding starwheels by opening the said pouches, inserting the spout inside the opening and then welding the edges of the pouch, both the pouches and the spouts must be fed to the processing starwheel.

The problem of ensuring continuous feed of both pouches and spouts to the rotary machine has yet to be resolved.

EP-A2-1291162 discloses a packaging machine with a plug attaching device that receives containers via a container feeder from a magazine. Plugs are provided from a plug feeder and are attached to the containers and sealed. The assembled containers are conveyed by the plug attaching device to an intermittently rotating sterilizing turret.

### DISCLOSURE OF THE INVENTION.

It is an object of the present invention to resolve the above-mentioned problem by providing an apparatus that can feed the pouches and their respective spouts to a rotary machine for the processing of the same, having the capacity to ensure continuous feeding of both spouts and pouches.

Further, it is an object of the present invention to create an apparatus to simultaneously feed both pouches and spouts to a rotary machine for the processing of the same.

Further still, it is an object of the present invention to present an apparatus for feeding pouches and their respective spouts which is able to guarantee high productivity.

Further still, it is an object of the present invention to present an apparatus for feeding pouches and their respective spouts which is easy to construct and reliable.

Further still, it is an object of the present invention to present a method for feeding pouches and spouts to a rotary machine for the processing of the same that is easy to implement.

The above objects are fully attained through the apparatus according to claim 1 and by the method according to claim 10.

### BEST MODE FOR CARRYING OUT THE INVENTION.

This and other objects shall become more readily apparent in the following description of a preferred embodiment illustrated, purely by way of non limiting example, in the accompanying drawing tables in which:
- figure 1 is a partially sectioned front view of an apparatus for feeding pouches and their respective spouts to a rotary machine for the processing of the same;
- figure 2 is a diagram, viewed from above, showing the principle of operation of the apparatus shown in figure 1.

With reference to the figures, an apparatus for feeding pouches and their respective spouts to a rotary machine for the processing of the same is globally indicated by the number 1. In particular, the rotary machine can be, for example, a pouch-forming starwheel equipped with welding grippers to weld the spouts to the pouches.

The apparatus 1 comprises a first magazine 2 designed to contain a stock of pouches 102 and a second magazine 3 designed to hold a set number of spouts 103.

In a totally new and original manner, the apparatus 1 comprises a handling unit 4 designed so as to be able to pick up a pouch 102 and a spout 103 from their respective magazines and feed them simultaneously, and in continuous mode, to a rotary machine.

In the example illustrated, the handling unit 4 is secured to a rotating platform 6 keyed to a first support shaft 5.

In particular, the handling unit 4 also comprises a second support shaft 7 which is mobile so as to be able to rotate around the first vertical axis A, between an operating position of picking up of a pouch 102 and of a spout 103 and an operating position for transferring the same to the rotary machine. The means for picking up a pouch and the means for picking up a spout are installed on the said second support shaft 7.

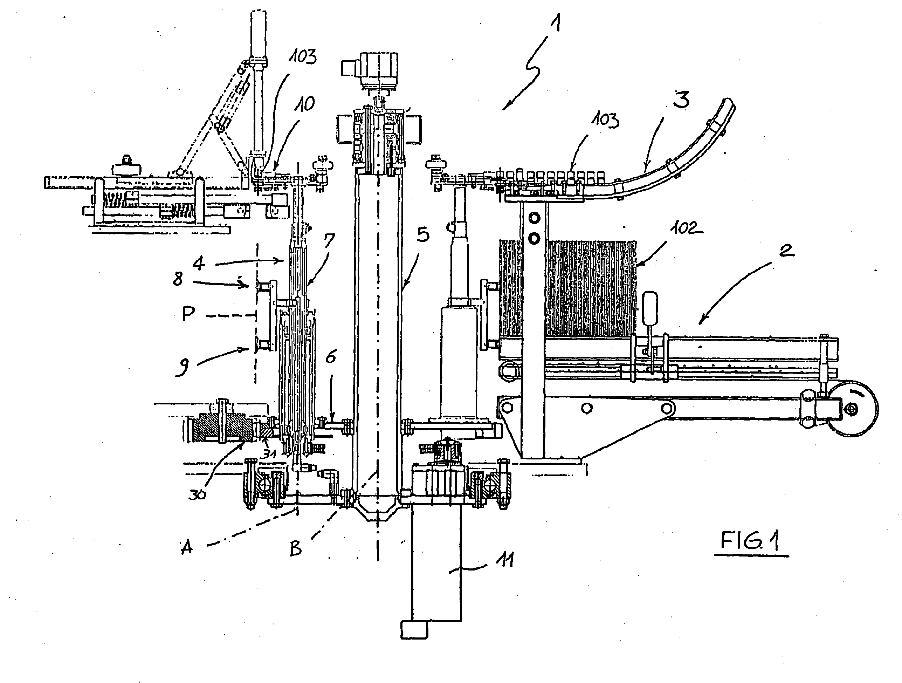

In the example illustrated, said means for picking up a pouch consist of a pair of suction cups 8, 9 vertically aligned and arranged on the same vertical plane P (in figure 1, said vertical plane P is viewed from the side).

In the embodiment illustrated, the means for picking up a spout is preferably a gripper 10.

With particular reference to figure 1, the second support shaft 7 is secured perimetrically to the rotating platform 6, which rotates around a second axis B which is substantially vertical and which passes through the said first support shaft 5. More precisely, the second support shaft 7 revolves around the first vertical axis A at the same time as the rotating platform 6 rotates around the second vertical axis B, so that the suction cups 8, 9 and the gripper 10 are activated by hypocycloid movement as they travel from magazines 2 and 3 to the rotary machine for the processing of pouches and spouts.

With particular reference to the embodiment shown in figure 1, the rotating platform 6 is moved directly by the rotary machine for the processing of pouches and spouts, for example through a mechanical coupling of toothed gears 30 integral to the rotary machine and corresponding toothed gears 31, integral to the rotating platform 6.

In the example illustrated, the second rotating shaft 7 is preferably moved by an electric motor 11 secured to the rotating platform 6 and therefore integral to said platform.

In the embodiment shown, the apparatus 1 for feeding pouches and their respective spouts is preferably built of a single rotating platform and several second rotating shafts 7, each of which equipped with at least a pair of suction cups for picking up and holding a pouch and at least one gripper for picking up a spout.

The method for feeding the pouches and spouts to the rotary machine for the processing of the same comprises the following phases:
arranging a magazine of pouches;
arranging a magazine of spouts;
picking up of a pouch (102) from the corresponding magazine (2); and
picking up of a spout (103) from the corresponding magazine (3).

In a new and original manner, the method of the present invention comprises a step of simultaneous, continuous feeding of the pouches and spouts to the rotary machine for the processing of the same.

Preferably, the step of feeding pouches and spouts to the rotary machine for the processing of the same takes place through hypocycloid movement of the pouches and spouts from the magazines to a discharge point on said rotary machine.

The principle of operation of the invention is as follows.

The rotating platform 6 is powered directly by the rotary machine for the processing of pouches and spouts through the coupling of toothed gears 30 integral to the rotary machine and toothed gears 31 integral to the rotating platform 6.

At the same time, the support shaft 7 which is part of the handling unit 4 is made to rotate around the first axis A by the electric motor 11, integrally secured to rotating platform 6.

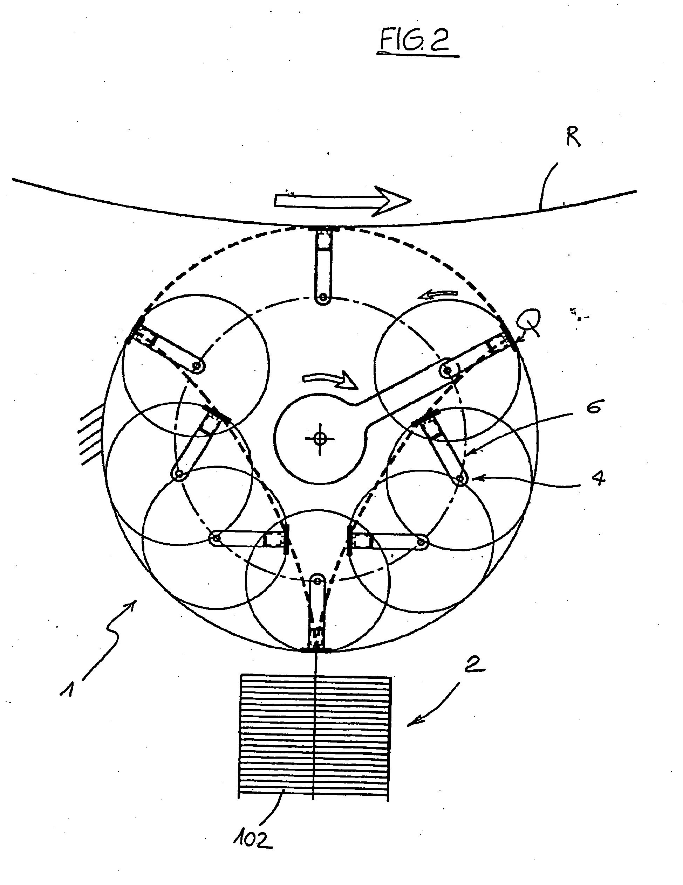

In this way, the suction cups 8, 9 and the gripper 10 are moved by hypocycloid movement, travelling from the area where the pouches 102 and spouts 103 are picked up from their magazines 2, 3 to the area where the pouches and spouts are transferred to the rotary machine for the processing of the same (indicated with the letter R in figure 2).

In particular, as shown in figure 2, the trajectory followed by the suction cups 8, 9 and the gripper 10 is indicated by point Q. Specifically, this point describes a cusp at magazines 2, 3 containing the pouches and spouts (only the magazine containing the pouches 102 is shown in figure 2), so that the absolute speed of movement of the suction cups and of the gripper is cancelled out. In this way, the suction cups and the gripper can pick up the pouches 102 and the spouts 103 (which are not moving) without "wrenching" them from their respective magazines.

Subsequently, point Q shown in figure 2, follows a trajectory which substantially describes a circumferential arch so that the relative speed of the suction cups 8, 9 and of the gripper 10 vs. the rotary machine R is cancelled out.

In this way, the suction cups and the gripper are able to transfer the pouches 102 and spouts 103 to the rotary machine R in a precise manner.

The principle of operation described above refers to an apparatus equipped with a single handling unit 4, but it is identical for apparatuses equipped with several of these handling units.

This invention offers some important advantages.

First of all, an apparatus in accordance with the present invention is able to feed both spouts and pouches in continuous mode, thus guaranteeing high productivity.

Another important advantage of the present invention is that it can feed both spouts and pouches simultaneously.

Advantageously, an apparatus in accordance with the present invention is compact and extremely reliable.

A further advantage of the present invention is that it can handle pouches and spouts safely and without damaging them while till ensuring high productivity.

## Claims

1. Apparatus (1) for feeding pouches (102) and respective spouts (103) to a rotary machine (R) for the processing of the same, comprising:
at least a magazine (2) for the pouches (102);
at least a magazine (3) for the spouts (103); and
at least a handling unit (4),
**characterized in that**
said handling unit (4) is designed to be able to pick up a pouch (102) and a spout (103) from their respective magazines (2, 3) and feed them simultaneously, and in continuous manner, to a rotary machine (R) for their processing; and
to move the pouches (102) and spouts (103) in a hypocycloid manner from their respective magazines (2, 3) to a discharge zone on said rotary machine (R).

2. Apparatus as claimed in claim 1, wherein said handling unit (4) comprises: means for picking up a pouch (102); means for picking up a spout (103), said means for picking up a pouch (102) and said means for picking up a spout (103) being fixed to a mobile support structure (4, 7) between at least one operating position for the picking up of a pouch (102) and of a spout (103) and at least one operating position for the transfer of said pouch (102) and said spout (103) to the rotary machine (R).

3. Apparatus as claimed in claim 2, wherein said means for picking up a pouch (102) comprises at least a suction cup.

4. Apparatus as claimed in claim 2 or 3, wherein said means for picking up a pouch (102) comprises at least one pair of suction cups (8, 9), said section cups (8, 9)being vertically aligned and arranged on the same vertical plane (P).

5. Apparatus as claimed in any one of the above claims from 2 to 4, wherein said means for picking up a spout (103) comprises at least a gripper (10).

6. Apparatus as claimed in any one of the above claims from 2 to 5, wherein said support structure (4, 7) rotates around a first substantially vertical axis (A).

7. Apparatus as claimed in claim 6, wherein said support structure (4,7) is fixed to a perimetral zone of a rotating platform (6) that rotates around a second substantially vertical axis (B), said support structure (4, 7) rotating around said first vertical axis (A) simultaneously with the rotation of said rotating platform (6) around said second vertical axis (B), so that the means for picking up a pouch (102) and the means for picking up a spout (103) move in a hypocycloid manner as they travel from the magazines (2, 3) to the rotary machine (R).

8. Apparatus as claimed in claim 7, **characterized in that** it comprises: first means of movement integrally fixed to the rotating platform (6) and operatively active on said support structure (4, 7); second means of movement operatively active on said rotating platform (6).

9. Apparatus as claimed in claim 8, wherein said first means of movement comprise at least an electric motor (11).

10. Method for feeding pouches (102) and spouts (103) to a rotary machine (R) for the processing of the same, comprising the following steps:
arranging a magazine (2) of pouches (102);
arranging of a magazine (3) of spouts (103);
picking up of a pouch (102) from the corresponding magazine (2); and
picking up of a spout (103) from the corresponding magazine (3),
**characterized in that**
it further comprises, the step of feeding said pouches (102) and said spouts (103) simultaneously and continuosly to the rotary machine (R) for the processing of the same, wherein said step of feeding the pouches (102) and the spouts (103) to the rotary machine (R) for the processing of the same takes place through hypocycloid movement of the pouches (102) and spouts (103) themselves, from their respective magazines (2, 3) to a discharge zone on said rotary machine (R).

## Patentansprüche

1. Vorrichtung (1) zum Zuführen von Beuteln (102) und zugehörigen Tüllen (103) zu einer Drehmaschine (R) für eine Verarbeitung derselben, umfassend:
wenigstens ein Magazin (2) für die Beutel (102);
wenigstens ein Magazin (3) für die Tüllen (103); und
wenigstens eine Handhabungseinheit (4),
**dadurch gekennzeichnet, dass**
die Handhabungseinheit (4) derart ausgestaltet ist, dass sie in der Lage ist, einen Beutel (102) und eine Tülle (103) aus ihren jeweiligen Magazinen (2, 3) aufzunehmen und sie gleichzeitig und auf kontinuierliche Weise einer Drehmaschine (R) für ihre Verarbeitung zuzuführen; und
die Beutel (102) und die Tüllen (103) nach Art einer Hypozykloide aus ihren jeweiligen Magazinen (2, 3) zu einer Abgabezone an der Drehmaschine (R) zu bewegen.

2. Vorrichtung nach Anspruch 1, wobei die Handhabungseinheit (4) umfasst: Mittel zum Aufnehmen eines Beutels (102); Mittel zum Aufnehmen einer Tülle (103), wobei das Mittel zum Aufnehmen eines Beutels (102) und das Mittel zum Aufnehmen einer Tülle (103) an einer mobilen Stützstruktur (4, 7) zwischen wenigstens einer Betriebsposition für das Aufnehmen eines Beutels (102) und einer Tülle (103) und wenigstens einer Betriebsposition für die Übertragung des Beutels (102) und der Tülle (103) zu der Drehmaschine (R) befestigt sind.

3. Vorrichtung nach Anspruch 2, wobei das Mittel zum Aufnehmen eines Beutels (102) wenigstens einen Saugnapf umfasst.

4. Vorrichtung nach Anspruch 2 oder 3, wobei das Mittel zum Aufnehmen eines Beutels (102) wenigstens ein Paar von Saugnäpfen (8, 9) umfasst, wobei die Saugnäpfe (8, 9) vertikal ausgerichtet und in derselben vertikalen Ebene (P) angeordnet sind.

5. Vorrichtung nach einem der vorhergehenden Ansprüche 2 bis 4, wobei das Mittel zum Aufnehmen einer Tülle (103) wenigstens einen Greifer (10) umfasst.

6. Vorrichtung nach einem der vorhergehenden Ansprüche 2 bis 5, wobei sich die Stützstruktur (4, 7) um eine erste im Wesentlichen vertikale Achse (A) dreht.

7. Vorrichtung nach Anspruch 6, wobei die Stützstruktur (4, 7) an einer Umfangszone einer sich drehenden Plattform (6) befestigt ist, die sich um eine zweite im Wesentlichen vertikale Achse (B) dreht, wobei sich gleichzeitig mit der Drehung der sich drehenden Plattform (6) um die zweite vertikale Achse (B) die Stützstruktur (4, 7) derart um die erste vertikale Achse (A) dreht, dass sich das Mittel zum Aufnehmen eines Beutels (102) und das Mittel zum Aufnehmen einer Tülle (103) nach Art einer Hypozykloide bewegen, wenn sie von den Magazinen (2, 3) zu der Drehmaschine (R) laufen.

8. Vorrichtung nach Anspruch 7, **dadurch gekennzeichnet, dass** sie umfasst: erste Bewegungsmittel, die integral an der sich drehenden Plattform (6) befestigt und funktionell an der Stützstruktur (4, 7) aktiv sind; und zweite Bewegungsmittel, die funktionell an der sich drehenden Plattform (6) aktiv sind.

9. Vorrichtung nach Anspruch 8, wobei das erste Bewegungsmittel wenigstens einen Elektromotor (11) umfasst.

10. Verfahren zum Zuführen von Beuteln (102) und Tüllen (103) zu einer Drehmaschine (R) für eine Verarbeitung derselben, umfassend die nachfolgenden Schritte:
Anordnen eines Magazins (2) der Beutel (102);
Anordnen eines Magazins (3) der Tüllen (103);
Aufnehmen eines Beutels (102) aus dem entsprechenden Magazin (2); und
Aufnehmen einer Tülle (103) aus dem entsprechenden Magazin (3),
**dadurch gekennzeichnet, dass**
das Verfahren des Weiteren den Schritt des gleichzeitigen und kontinuierlichen Zuführens der Beutel (102) und der Tüllen (103) zu der Drehmaschine (R) für eine Verarbeitung derselben umfasst, wobei der Schritt des Zuführens der Beutel (102) und der Tüllen (103) zu der Drehmaschine (R) für eine Verarbeitung derselben mittels einer Hypozykloidalbewegung der Beutel (102) und Tüllen (103) selbst aus ihren jeweiligen Magazinen (2, 3) zu einer Abgabezone an der Drehmaschine (R) ausgeführt wird.

## Revendications

1. Appareil (1) pour alimenter en poches (102) et en becs verseurs respectifs (103) une machine rotative (R) pour le traitement de ceux-ci, comprenant :
au moins un magasin (2) pour les poches (102) ;
au moins un magasin (3) pour les becs verseurs (103) ; et
au moins une unité de manipulation (4),
**caractérisé en ce que**
ladite unité de manipulation (4) est conçue pour pouvoir prélever une poche (102) et un bec verseur (103) de leurs magasins respectifs (2, 3) et les acheminer simultanément et de manière continue à une machine rotative (R) pour leur traitement ; et
pour déplacer les poches (102) et les becs verseurs (103) en mode hypocycloïde de leurs magasins respectifs (2, 3) dans une zone de décharge sur ladite machine rotative (R).

2. Appareil selon la revendication 1, dans lequel ladite unité de manipulation (4) comprend un moyen pour prélever une poche (102) ; un moyen pour prélever un bec verseur (103), ledit moyen pour prélever une poche (102) et ledit moyen pour prélever un bec verseur (103) étant fixés à une structure de support mobile (4, 7) entre au moins une position opératoire pour le prélèvement d'une poche (102) et d'un bec verseur (103) et au moins une position opératoire pour le transfert de ladite poche (102) et dudit bec verseur (103) à la machine rotative (R).

3. Appareil selon la revendication 2, dans lequel ledit moyen pour prélever une poche (102) comprend au moins une ventouse.

4. Appareil selon la revendication 2 ou 3, dans lequel ledit moyen pour prélever une poche (102) comprend au moins une paire de ventouses (8, 9), lesdites ventouses (8, 9) étant alignées verticalement et aménagées dans le même plan vertical (P).

5. Appareil selon l'une quelconque des revendications 2 à 4, dans lequel ledit moyen pour prélever un bec verseur (103) comprend au moins un élément de préhension (10).

6. Appareil selon l'une quelconque des revendications 2 à 5, dans lequel ladite structure de support (4, 7) tourne autour d'un premier axe sensiblement vertical (A).

7. Appareil selon la revendication 6, dans lequel ladite structure de support (4, 7) est fixée à une zone périmétrique d'une plateforme rotative (6) qui tourne autour d'un second axe sensiblement vertical (B), ladite structure de support (4, 7) tournant autour dudit premier axe vertical (A) en même temps que la rotation de ladite plateforme rotative (6) autour dudit second axe vertical (B), de sorte que le moyen pour prélever une poche (102) et le moyen pour prélever un bec verseur (103) se déplacent en mode hypocycloïde lorsqu'ils se déplacent des magasins (2, 3) à la machine rotative (R).

8. Appareil selon la revendication 7, **caractérisé en ce qu'**il comprend un premier moyen de déplacement intégralement fixé à la plateforme rotative (6) et actif en service sur ladite structure de support (4, 7) ; et un second moyen de déplacement actif en service sur ladite plateforme rotative (6).

9. Appareil selon la revendication 8, dans lequel ledit premier moyen de déplacement comprend au moins un moteur électrique (11).

10. Procédé pour alimenter en poches (102) et en becs verseurs (103) une machine rotative (R) pour leur traitement, comprenant les étapes consistant à :
aménager un magasin (2) de poches (102) ;
aménager un magasin (3) de becs verseurs (103) ;
prélever une poche (102) dans le magasin correspondant (2) ; et
prélever un bec verseur (103) dans le magasin correspondant (3), **caractérisé en ce que**
il comprend en outre l'étape d'alimentation en dites poches (102) et en dits becs verseurs (103) simultanément et en continu de la machine rotative (R) pour leur traitement, dans lequel ladite étape d'alimentation en poches (102) et en becs verseurs (103) de la machine rotative (R) pour leur traitement a lieu selon un mode de déplacement hypocycloïde des poches (102) et des becs verseurs (103) eux-mêmes de leurs magasins respectifs (2, 3) à une zone de décharge sur ladite machine rotative (R).
